# EUROPÄISCHE PATENTSCHRIFT

(11) **EP 0 507 865 B1**
(45) Veröffentlichungstag und Bekanntmachung des Hinweises auf die Patenterteilung: **29.11.1995**
(21) Anmeldenummer: 91902677.3
(22) Anmeldetag: 24.12.1990
(51) Int. Cl.: H04N 3/22, H04N 9/28

(54) **SCHALTUNG ZUR RASTERKORREKTUR IN EINEM FERNSEHGERÄT**
GRID-CORRECTION CIRCUIT FOR TV SETS
CIRCUIT DE CORRECTION DE DISTORSIONS DE LA TRAME POUR POSTES RECEPTEURS DE TELEVISION

(30) Priorität: 30.12.1989 DE 3943421
(43) Veröffentlichungstag der Anmeldung: 14.10.1992
(73) Patentinhaber: Deutsche Thomson-Brandt GmbH, 78003 Villingen-Schwenningen (DE)
(72) Erfinder: CHAUVIN, Jacques, D-7733 Mönchweiler (DE); SCHWEER, Rainer, D-7732 Niedereschach (DE); GLEIM, Günter, D-7730 VS-Villingen (DE); HEIZMANN, Friedrich, D-7730 VS-Obereschach (DE)
(86) Internationale Anmeldenummer: EP9002307
(87) Internationale Veröffentlichungsnummer: WO9110318

(56) Entgegenhaltungen:
- DE-A- 2 747 239
- US-A- 4 099 092

## Beschreibung

Die Erfindung geht aus von einer Schaltung zur Rasterkorrektur in einem Fernsehgerät gemäß dem Oberbegriff des Anspruchs 1.

Bei einer derartigen Schaltung wird für die Einstellung des jeweils notwendigen Korrekturstroms der Wert des der Korrekturspule zugeführten Stroms periodisch um einen geringen Betrag geändert. Der durch diese Änderung im Ablenkraster verursachte Hub, also die Verschiebung des Rasters in vertikaler oder horizontaler Richtung, ist so gering, daß er an sich nicht wahrnehmbar ist. Wenn jedoch diese geringe Änderung des Ablenkrasters periodisch erfolgt, kann sie als ein Wackeln des Bildes wahrgenommen werden. Das gilt besonders, wenn auf dem Bildschirm ein Gittermuster aus waagerechten und senkrechten weißen Linien dargestellt wird.

Der Erfindung liegt die Aufgabe zugrunde, die störende periodische Bewegung innerhalb des Ablenkrasters zu vermeiden, ohne die Gesamtfunktion der Schaltung mit der Pendelbewegung um den Sollwert zu beeinträchtigen.

Diese Aufgabe wird durch die im Anspruch 1 angegebene Erfindung gelöst. Vorteilhafte Weiterbildungen der Erfindung sind in den Unteransprüchen angegeben.

Die Erfindung beruht auf folgender Überlegung. Die beschriebene Pendelbewegung um den Sollwert ist notwendig, um sicherzustellen, daß der Istwert den Sollwert nicht in einer Richtung langsam verläßt, ohne daß dieses von der Schaltung registriert wird. Es reicht jedoch, wenn diese Pendelbewegung nur periodisch jeweils während einer nicht sichtbaren Zeit des Bildes erfolgt, z.B. während der Vertikalaustastzeit oder der Horizontalaustastzeit. Während der sichtbaren Zeit des Bildes erfolgt diese Pendelbewegung nicht. Auf den Korrekturstrom während des sichtbaren Ablenkrasters wird nur eingewirkt, wenn die Pendelbewegung während der nicht sichtbaren Zeit des Bildes eine zu große Abweichung darstellt. Der Pendelvorgang wird also verlagert und beschränkt auf den Bildbereich außerhalb der sichtbaren Bildfläche. In vorteilhafter Weise wird die Kombination des notwendigen Pendelvorganges mit einem stehenden Bild ohne störende periodische Bewegung des Ablenkrasters erreicht.

Ein Ausführungsbeispiel der Erfindung wird anhand der Zeichnung erläutert. Darin zeigen
- Fig. 1: ein Blockschaltbild der erfindungsgemäß ausgebildeten Schaltung und
- Fig. 2: Kurven zur Erläuterung der Wirkungsweise.

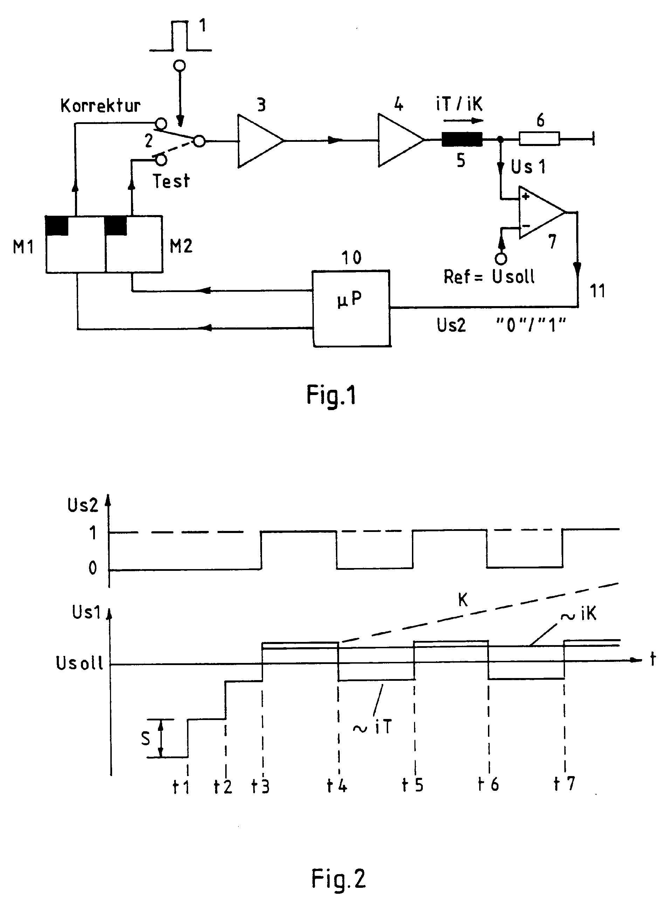

In Fig 1 beinhaltet der Speicher M1 Korrekturwerte für das Ablenkraster. Der Speicher M1 erzeugt über den Schalter 2 und die Verstärker 3, 4 in der Korrekturspule 5 einen Korrekturstrom iK jeweils für die Konvergenz von Bildpunkten, die durch ein Gittermuster auf dem Bildschirm definiert sind. Für jeden Punkt des Gittermusters wird in dem Speicher M1 eine Speicherzelle angesprochen.

Zusätzlich zu dieser dynamischen Korrektur der Konvergenz aufeinanderfolgender Bildpunkte soll noch ein Testvorgang erfolgen, um z.B. die statische Lage des Bildes, die sogenannte Offsetlage, zu stabilisieren. Zu diesem Zweck erzeugt der Speicher M2 ein Testsignal, das periodisch anstelle des Korrektursignals vom Speicher M1 über den Schalter 2 in der gestrichelten Stellung auf die Korrekturspule 5 gelangt. Dem Testsignal ist ein Teststrom iT mit einem definierten Sollwert zugeordnet, der durch das Testsignal jeweils erzeugt werden soll. Eine Abweichung des Teststromes iT vom Sollwert soll durch die Schaltung ausgeregelt werden. Der Sollwert des Teststromes iT aufgrund des Testsignals kann z.B. null sein. Zu diesem Zweck ist in den Fußpunkt der Korrekturspule 5 der Widerstand 6 eingefügt, an dem die dem Teststrom iT proportionale Spannung Us1 auftritt. Us1 wird dem Komparator 7 zugeführt, der einen Vergleich mit dem als Referenz dienenden Sollwert Usoll durchführt.

Anhand der Fig. 2 wird die Wirkungsweise erläutert. Im Zeitpunkt t1 hat die dem Teststrom iT proportionale Spannung Us1 einen Wert, der unterhalb des Sollwertes Usoll liegt. Der Komparator 7 liefert daraufhin die digitale Ausgangsspannung Us2 mit dem Wert "O". Us2 gelangt an den Mikroprozessor 10, der die beiden Speicher M1 und M2 speist. Der Speicher M2 erhält jetzt aufgrund des Wertes der Spannung Us2 die Information, daß der Teststrom iT aufgrund des zugeführten Testsignals zu gering ist. Daraufhin werden das Testsignal und der Teststrom um die Stufe S erhöht. Innerhalb der nächsten Vertikalaustastzeit wird festgestellt, daß sich Us2 nicht geändert hat, die vorgenommene Korrektur also noch nichts genutzt hat. Deshalb werden im Zeitpunkt t2 das Testsignal und der dadurch erzeugte Korrekturstrom um eine weitere Stufe S erhöht. Im Zeitpunkt t3 während der nächsten Vertikalaustastzeit erfolgt eine weitere Erhöhung von Us1 um die Stufe S. Bei dieser Erhöhung wird der Sollwert Usoll erreicht, woraufhin die Spannung Us2 den Wert "1" annimmt. Dieses ist ein Signal für den Prozessor 10 und den Speicher M2, daß die Korrektur erfolgreich war, Us1 seinen Sollwert erreicht hat und eine weitere Korrektur nicht erforderlich ist. An sich könnte jetzt die Schaltung in diesem Zustand mit dem eingestellten Teststrom und dem daraufhin zugeführten Korrekturstrom iK verbleiben.

Wenn jedoch über eine längere Zeit eine Abweichung in entgegengesetzter Richtung auftritt und gemäß der gestrichelten Kurve K die Spannung Us1 in entgegengesetzter Richtung abweicht, würde der Komparator 7 nicht mehr ansprechen, weil seine Schaltschwelle bereits im Zeitpunkt t3 erreicht war. Die gesamte Schaltung würde die Abweichung gemäß der Kurve K nicht mehr registrieren können. Deshalb wird nach einer bestimmten Zeit im Zeitpunkt t4 das Testsignal um eine Stufe S zurückgeschaltet. Wenn der Mikroprozessor 10 bei dieser Rückschaltung eine Änderung von Us2 von "1" auf "O" registriert, wird dieses als Indiz dafür gewertet, daß der Sollwert Usoll mit der notwendigen Annäherung eingehalten ist, also lediglich eine Abweichung von Usoll um eine Amplitudenstufe S vorliegt. Diese Pendelbewegung erfolgt jetzt weiterhin in den Zeitpunkten t4, t5, t6, t7 periodisch.

Die beschriebene Pendelbewegung erfolgt nur während der Vertikalaustastzeit oder der Horizontalaustastzeit, in der kein sichtbares Bild geschrieben wird. In der Zeit des sichtbaren Bildes findet die Pendelbewegung nicht statt. Der Korrekturstrom während dieser Zeit unterliegt nicht der Pendelbewegung und ist konstant, wie durch die Kurve iK in Fig. 2 angedeutet ist. Nur wenn die Schaltung eine Abweichung von Us1 vom Sollwert Usoll um mehr als eine Amplitudenstufe S registriert, wird auch der Korrekturstrom iK für das sichtbare Bild korrigiert. Diese Korrektur ist erfahrungsgemäß relativ selten, weil die gesamte Schaltung nur dazu dient, Langzeit-Schwankungen auszuregeln. Eine derartige seltene Änderung von iK und damit Änderung in der Lage des Ablenkrasters stört indessen erfahrungsgemäß nicht. Die Schaltung kann auch so ausgebildet sein, daß die Änderung des Korrekturstroms iK erst dann erfolgt, wenn die beschriebene Abweichung vom Sollwert Usoll mehrere Stufen S, z.B. zwei, drei oder vier Stufen beträgt.

## Patentansprüche

1. Schaltung zur Rasterkorrektur in einem Fernsehgerät, bei der in einem Testvorgang der Ablenkschaltung periodisch ein Testsignal zugeführt wird, der daraufhin fließende Teststrom (iT) und ein Sollwert (Usoll) einem Komparator (7) zugeführt werden, dessen digitales Ausgangssignal (Us2) über einen Prozessor (10) auf einen das Testsignal liefernden Speicher (M2) einwirkt und den Ablenkstrom um jeweils eine Stufe (S) ändert, bis der Ablenkstrom um eine Amplitudenstufe (S) um den Sollwert (Usoll) pendelt, wobei der Prozessor (10) auf einen den Korrekturstrom (iK) für das sichtbare Bild liefernden Speicher (M1) einwirkt, **dadurch gekennzeichnet**, daß der Testvorgang mit dem Pendelvorgang nur während einer nicht sichtbaren Zeit des Bildes erfolgt und eine Änderung des Korrekturstroms (iK) für die sichtbare Zeit des Bildes nur dann erfolgt, wenn der Teststrom (iT) um mehr als eine Stufe (S) vom Sollwert (Usoll) abweicht.

2. Schaltung nach Anspruch 1, **dadurch gekennzeichnet**, daß der Testvorgang jeweils während der Vertikalaustastzeit erfolgt.

3. Schaltung nach Anspruch 1, **dadurch gekennzeichnet**, daß der Testvorgang jeweils während der Horizontaustastzeiterfolgt.

4. Schaltung nach Anspruch 1, **dadurch gekennzeichnet**, daß ein Eingang eines die Korrektur-Ablenkspule (5) speisenden Verstärker (3) über einen Umschalter (2) periodisch abwechselnd mit dem Ausgang eines Speichers (M1) für den Korrekturstrom (iK) und mit dem Ausgang eines Speichers (M2) für den Teststrom (iT) verbunden ist.

5. Schaltung nach Anspruch 1, **dadurch gekennzeichnet**, daß eine Änderung des Korrekturstroms (iK) nur dann erfolgt, wenn der Teststrom (iT) um mehrere Stufen (S) vom Sollwert (Usoll) abweicht.

## Claims

1. A circuit for raster correction in a television device with which, in a test process, a test signal is periodically supplied to the deflection circuit, the test current (iT) flowing thereupon and a desired value (Usoll) are fed to a comparator (7) the digital output signal (Us2) of which, via a processor (10), acts upon a memory (M2), which supplies the test signal, and alters the deflection current by one step (S) in each case until the deflection current oscillates about the desired value (Usoll) by one amplitude step (S), in which the processor (10) acts upon a memory (M1) which supplies the correction current (iK) for the visible picture, **characterised in that** the test process with the oscillating motion only occurs during a time in which the picture is invisible and an alteration of the correction current (iK) for the visible time of the picture only occurs when the test current (iT) deviates by more than one step (S) from the desired value (Usoll).

2. A circuit according to claim 1, **characterised in that** the test process occurs in each case during the vertical blanking interval.

3. A circuit according to claim 1, **characterised in that** the test process occurs in each case during the horizontal blanking interval.

4. A circuit according to claim 1, **characterised in that** an input of an amplifier (3) supplying the correction deflector coil (5) is connected, in a periodically alternating way, via a change-over switch (2), with the output of a memory (M1) for the correction current (iK) and with the output of a memory (M2) for the test current (iT).

5. A circuit according to claim 1, **characterised in that** an alteration of the correction current (iK) only occurs when the test current (iT) deviates from the desired value (Usoll) by several steps (S).

## Revendications

1. Circuit de correction de trame dans un téléviseur, dans lequel, au cours d'un processus d'essai, un signal d'essai est alimenté périodiquement dans le circuit de balayage, le courant d'essai (iT) en résultant et une valeur de consigne (Usoll) sont alimentés à un comparateur (7), dont le signal de sortie numérique (Us2) influe, par le biais d'un processeur (10) sur une mémoire (M2) délivrant le signal d'essai et modifie le courant de balayage d'un étage (S) , jusqu'à ce que le courant de balayage oscille autour d'un étage d'amplitude (S) autour de la valeur de consigne (Usoll), le processeur (10) influant sur une mémoire (M1) délivrant le courant (iK) de correction de l'image visible, caractérisé en ce que le processus d'essai avec le processus oscillant ne se produit que pendant un intervalle non visible de l'image, et qu'une modification du courant (iK) de correction de l'intervalle visible de l'image ne se produit alors que lorsque le courant d'essai (iT) s'écarte de la valeur de consigne (Usoll) de plus d'un étage (S).

2. Circuit selon la revendication 1, caractérisé en ce que le processus d'essai se produit à chaque fois pendant l'intervalle de suppression de trame.

3. Circuit selon la revendication 1, caractérisé en ce que le processus d'essai se produit à chaque fois pendant l'intervalle de suppression de ligne.

4. Circuit selon la revendication 1, caractérisé en ce qu'une entrée d'un amplificateur (3) alimentant la bobine de balayage correctrice (5) par le biais d'un commutateur (2) est reliée de manière alternée périodiquement à la sortie d'une mémoire (M1) pour le courant de correction (iK) et à la sortie d'une mémoire (M2) pour le courant d'essai (iT).

5. Circuit selon la revendication 1, caractérisé en ce qu'une modification du courant de correction (iK) ne se produit que lorsque le courant d'essai (iT) s'écarte de plusieurs étages (S) de la valeur de consigne (Usoll).
